# EUROPÄISCHE PATENTSCHRIFT

(11) **EP 2 162 332 B1**
(45) Veröffentlichungstag und Bekanntmachung des Hinweises auf die Patenterteilung: **13.04.2011**
(21) Anmeldenummer: 08750018.7
(22) Anmeldetag: 05.05.2008
(51) Int. Cl.: B60W 20/00, B60W 30/18

(54) **VERFAHREN ZUM KÜHLEN VON KOMPONENTEN EINES KRAFTFAHRZEUGS**
METHOD FOR COOLING COMPONENTS OF A MOTOR VEHICLE
PROCÉDÉ DE REFROIDISSEMENT DE COMPOSANTS D'UN VÉHICULE À MOTEUR

(30) Priorität: 15.05.2007 DE 102007022855
(43) Veröffentlichungstag der Anmeldung: 17.03.2010
(73) Patentinhaber: Robert Bosch GmbH, 70442 Stuttgart (DE)
(72) Erfinder: NEUSINGER, Eva, 71634 Ludwigsburg (DE); THULKE, Mirko, 71254 Ditzingen (DE)
(86) Internationale Anmeldenummer: PCT/EP2008/055452
(87) Internationale Veröffentlichungsnummer: WO 2008/138788

(56) Entgegenhaltungen:
- DE-A1-102004 053 850
- DE-A1-102005 003 881
- DE-A1-102005 047 653
- US-A1- 2004 069 546

## Beschreibung

Die Erfindung betrifft ein Verfahren zum Kühlen von Komponenten eines Kraftfahrzeugs, nach dem Oberbegriff des Anspruchs 1 wobei die momentane Kühlleistung aus einer Gesamt-Kühlanforderung ermittelt wird und sich die Gesamt-Kühlanforderung aus Einzel-Kühlanforderungen der Komponenten zusammensetzt vgl. DE 10 2005 047 653A, DE 10 2005 003 881A.

### Stand der Technik

Verfahren der eingangs genannten Art zum Kühlen von Komponenten eines Kraftfahrzeugs sind bekannt. So werden bei bekannten Kraftfahrzeugen eine Einzel-Kühlanforderung einer Brennkraftmaschine, eines Getriebes, und/oder einer Klimaanlage, sowie gegebenenfalls die einer Ladeluftkühlung berücksichtigt. In Abhängigkeit von den Einzel-Kühlanforderungen wird beispielsweise die Temperatur eines Kühlmittels eines Kühlmittelkreislaufs des Kraftfahrzeugs und/oder ein Kühlluftstrom durch den Motorraum des Kraftfahrzeugs eingestellt. Hierzu werden durch geeignete Logik-Ansteuerungssignale beispielsweise ein Kühlerlüfter und/oder ein Thermostat des Kraftfahrzeugs von einer Steuereinheit beziehungsweise einem Steuergerät angesteuert. Auf diese Art und Weise kann zum Einen die Kühlmitteltemperatur und somit die Temperatur der im Kühlmittelkreislauf verbauten, zu kühlenden Komponenten des Kraftfahrzeugs geregelt werden. Zum Anderen kann für eine ausreichende Luftzirkulation im Motorraum und somit für eine Kühlung auch von Komponenten, die nicht in den Kühlmittelkreislauf eingebunden sind, gesorgt werden.

### Offenbarung der Erfindung

Die Erfindung sieht die Merkmale von Anspruch 1 vor.

Erfindungsgemäß ist vorgesehen, dass als Betriebszustands-Faktor der Betriebsstatus der elektrischen Maschine beziehungsweise des Hybridantriebs berücksichtigt wird, wobei der Betriebsstatuts das Fahrprogramm, in welchem sich der Hybridantrieb befindet, beschreibt. So kann sich der Hybridantrieb und insbesondere die elektrische Maschine beispielsweise in einem elektrischen Fahrbetrieb oder einem Boost-Fahrbetrieb befinden. Die unterschiedlichen Fahrbetriebe beziehungsweise der Betriebsstatus wirkt sich dabei direkt auf die Einzel-Kühlanforderung der elektrischen Maschine (elektrische Maschinen-Kühlanforderung) aus. Durch Berücksichtigung des Betriebszustandes beziehungsweise eines oder mehrerer den Betriebszustand definierenden Faktoren der elektrischen Maschine, wird die Funktion des Hybridantriebs auf Dauer gewährleistet.

Hierdurch wird gewährleistet. dass auch die elektrische Maschine und/oder die Leistungselektronik des Hybridantriebs ausreichend gekühlt werden, auch wenn diese Komponenten nicht direkt in einen Kühlmittelkreislauf des Kraftfahrzeugs eingebunden sind. Eine ausreichende Kühlung der elektrischen/elektronischen Komponenten des Kraftfahrzeugs beziehungsweise des Hybridantriebs wird somit gewährleistet.

Zusätzlichkann die Kühlanforderung der leistungselectronik berücksichtigt werden.

Zweckmäßigerweise weist die Leistungselektronik mindestens einen Pulswechselrichter auf, mittels dessen die elektrische Maschine betrieben werden kann. Durch das vorteilhafte Verfahren wird ein Überhitzen des Pulswechselrichters verhindert und vorteilhafterweise dafür gesorgt, dass der Pulswechselrichter in einem vorteilhaften Temperaturbereich arbeitet.

Weiterhin weist die Leistungselektronik vorteilhafterweise mindestens einen DCDC-Wandler auf. Der DCDC-Wandler, oder auch Gleichstromsteller genannt, wird aufgrund des vorteilhaften Verfahrens ausreichend gekühlt beziehungsweise in einem vorteilhaften Temperaturbereich gehalten. Weist die Leistungselektronik sowohl den Pulswechselrichter als auch den DCDC-Wandler auf, so werden bei der Bestimmung der Leistungselektronik-Kühlanforderung Einzel-Kühlanforderungen des Pulswechselrichters und/oder des DCDC-Wandlers berücksichtigt.

Zweckmäßigerweise wird zur Bestimmung der Leistungselektronik-Kühlanforderung der Betriebszustand der Leistungselektronik berücksichtigt. In einer vorteilhaften Weiterbildung ist vorgesehen, dass zur Bestimmung der Leistungselektronik-Kühlanforderung der Betriebszustand des Pulswechselrichters berücksichtigt wird. Insbesondere werden hierbei die aktuelle Betriebstemperatur der Leistungselektronik, des Pulswechselrichters und/oder Gradienten der Temperatur des Pulswechselrichters berücksichtigt.

Weist die Leistungselektronik einen DCDC-Wandler auf, so wird vorteilhafterweise zur Bestimmung der Leistungselektronik-Kühlanforderung der Betriebszustand des DCDC-Wandlers berücksichtigt. Wobei der Betriebszustand des DCDC-Wandlers insbesondere durch seine aktuelle Betriebstemperatur und/oder seine aktuelle (elektrische) Last definiert wird.

Vorteilhafterweise werden zur Bestimmung einer Einzel-Kühlanforderung Kennwerte, Kennlinien und/oder Kennfelder der Komponenten des Kraftfahrzeugs verwendet, die zweckmäßigerweise vorab ermittelt und beispielsweise in einem nicht flüchtigen Speicher eines Steuergeräts des Kraftfahrzeugs hinterlegt werden. Die Bestimmung einer Einzel-Kühlanforderung wird durch die Verwendung von Kennwerten, Kennlinien und/oder Kennfeldern vereinfacht und beschleunigt.

Darüber hinaus ist vorgesehen, dass zur Bestimmung einer Einzel-Kühlanforderung die Umgebungslufttemperatur und/oder der Umgebungsdruck des Kraftfahrzeugs, insbesondere des Hybridantriebs des Kraftfahrzeugs, berücksichtigt werden. Hierdurch wird die aktuelle Kühlleistung an äußere Gegebenheiten angepasst, sodass die Komponenten des Kraftfahrzeugs besonders effizient gekühlt werden.

Mit Vorteil wird zum Bestimmen einer Einzel-Kühlanforderung zusätzlich oder alternativ die Fahrzeuggeschwindigkeit des Kraftfahrzeugs berücksichtigt. Die Fahrzeuggeschwindigkeit hat insbesondere Einfluss auf die durch den Motorraum zirkulierende und/oder strömende Luft. Es wird also die Durchströmung beziehungsweise Umströmung von zu kühlenden Komponenten des Kraftfahrzeugs mitberücksichtigt.

Schließlich ist vorgesehen, dass die Einzel-Kühlanforderungen von mindestens einer Komponente des Kraftfahrzeugs explizit vorgegeben wird. Das bedeutet, dass mindestens eine Komponente ein Signal ausgibt, welches der Einzel-Kühlanforderung der Komponente entspricht, sodass diese nicht erst, beispielsweise von dem Steuergerät des Kraftfahrzeugs, aus den von der Komponente ausgegebenen, ihren Betriebszustand beschreibenden Signalen ermittelt werden muss.

### Kurze Beschreibung der Zeichnungen

Die Erfindung soll anhand einiger Figuren näher erläutert werden. Dazu zeigen im Folgenden:
- Figur 1: eine schematische Darstellung des erfindungsgemäßen Verfahrens und
- Figur 2: eine schematische Darstellung der Bestimmung von Einzel- Kühlanforderungen.

### Ausführungsform(en) der Erfindung

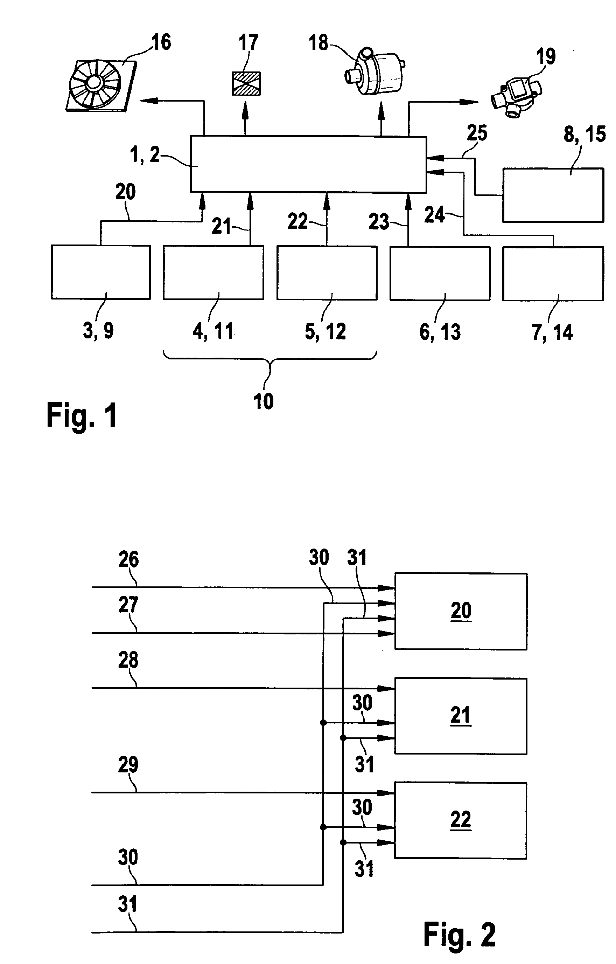

Die Figur 1 zeigt in einer schematischen Block-Darstellung ein erfindungsgemäßes Verfahren zum Kühlen von Komponenten eines mit einem Hybridantrieb betriebenen Kraftfahrzeugs. Die Figur 1 zeigt dazu einen Block 1, der ein Logikteil 2, beispielsweise eines Steuergeräts des Kraftfahrzeugs, darstellt. Das Logikteil 2 ist mit mehreren durch Blöcke dargestellte, zu kühlenden Komponenten 3, 4, 5, 6, 7 und 8 des Kraftfahrzeugs wirkverbunden. Der Block 3 stellt in dem vorliegenden Ausführungsbeispiel eine elektrische Maschine 9 dar, die sowohl motorisch als auch generatorisch betrieben werden kann. Um die volle Funktionsfähigkeit der elektrischen Maschine 9 während der gesamten Betriebsdauer des Kraftfahrzeugs zu gewährleisten ist eine ausreichende Kühlung erforderlich. Die elektrische Maschine 9 wird von einer Leistungselektronik 10 angesteuert, die einen DCDC-Wandler 11, dargestellt durch den Block 4, und einen Pulswechselrichter 12, dargestellt durch den Block 5, aufweist. Der Block 6 stellt einen Verbrennungsmotor 13 und der Block 7 ein Klimaanlagensystem 14 des Kraftfahrzeugs dar. Der Block 8 stellt einen Energiespeicher 15 dar, der von der elektrischen Maschine 9 im generatorischen Betrieb erzeugte Energie speichert und im motorischen Betrieb der elektrischen Maschine 9 gespeicherte Energie zur Verfügung stellt. Weiterhin sind ein Kühlerlüfter 16, ein elektronisch gesteuertes Thermostat 17, eine Zusatzwasserpumpe 18 und ein Drei-Wege-Ventil 19 dargestellt, die von dem Logikteil 2 angesteuert werden, wobei das Thermostat 17, das Drei-Wege-Ventil 19 und die Zusatzwasserpumpe 18 Bestandteil eines Kühlmittelskreislaufs des Kraftfahrzeugs sind, wobei der Kühlmittelkreislauf mehrere Zweige aufweisen kann.

Das Logikteil 2 bestimmt eine momentane Kühlleistung aus einer Gesamt-Kühlanforderung heraus und steuert den Kühlerlüfter 16, Thermostat 17, Zusatzwasserpumpe 18 und/oder das Drei-Wege-Ventil 19 entsprechend an, um diese Kühlleistung zu erbringen, sodass sämtliche Komponenten 3 bis 8 des Kraftfahrzeugs ausreichend gekühlt werden. Dabei werden Einzel-Kühlanforderungen, gekennzeichnet durch die Pfeile 20 bis 25 der Komponenten 3 bis 8 berücksichtigt. Insbesondere werden hierbei eine elektrische Maschinen-Kühlanforderung (20) und eine Leistungselektronik-Kühlanforderung (21,22) berücksichtigt. Dadurch wird auch eine ausreichende Kühlung der elektrischen/elektronischen Komponenten 3 bis 5 des Kraftfahrzeugs gewährleistet. Die Einzel-Kühlanforderungen 20 bis 25 können entweder von den Komponenten 3 bis 8 explizit dem Logikteil 2 vorgegeben werden, wodurch besonders schnell die Gesamt-Kühlanforderung bestimmt beziehungsweise die momentane/momentan geforderte Kühlleistung eingestellt werden kann, oder sie werden anhand von von den Komponenten 3 bis 8 gelieferten Betriebszustands-Daten ermittelt/bestimmt werden.

Die Figur 2 zeigt in einem Ausführungsbeispiel schematisch ein nicht erfindungsgemäßes Ausführungsbeispiel zur Bestimmung der Einzel-Kühlanforderungen 20, 21 und 22 der elektrischen Maschine 9, des DCDC-Wandlers 11 und des Pulswechselrichters 12. Bei der Bestimmung der Einzel-Kühlanforderung 20 beziehungsweise der elektrischen Maschinen-Kühlanforderung werden die momentane Temperatur der elektrischen Maschine, gekennzeichnet durch den Pfeil 26 sowie die aktuelle Drehzahl, gekennzeichnet durch den Pfeils 27 berücksichtigt, sodass die Einzel-Kühlanforderung 20 in Abhängigkeit von der aktuellen Temperatur (26) und der Drehzahl (27) bestimmt wird. Natürlich ist es denkbar, noch weitere, den Betriebszustand der elektrischen Maschine 9 beschreibende Faktoren bei der Bestimmung der Einzel-Kühlanforderung 20 beziehungsweise der elektrische Maschinen-Kühlanforderung, wie zum Beispiel eine aktuelle mechanische und/oder elektrische Last zu berücksichtigen.

Zur Bestimmung der Einzel-Kühlanforderung 21 des DCDC-Wandlers 11 wird dessen Betriebszustand, beschrieben durch seine aktuelle Betriebstemperatur, gekennzeichnet durch den Pfeil 28, berücksichtigt. Zur Bestimmung der Einzel-Kühlanforderung 22 des Pulswechselrichters 12 wird sein Betriebszustand, ausgedrückt durch seine aktuelle Betriebstemperatur, gekennzeichnet durch den Pfeil 29, berücksichtigt.

Zusätzlich zu den oben beschriebenen, die jeweiligen Betriebszustände beschreibenden Faktoren, werden bei der Bestimmung der Einzel-Kühlanforderungen 20, 21 und 22 die aktuelle Umgebungstemperatur, gekennzeichnet durch die Pfeile 30, sowie der aktuelle Umgebungsdruck, gekennzeichnet durch die Pfeile 31, berücksichtigt. Dadurch kann die Kühlleistung individuell an die aktuell herrschenden Umgebungsbedingungen angepasst werden.

Bei der Bestimmung der Einzel-Kühlanforderungen 20 bis 25 werden vorab ermittelte Kennwerte, Kennlinien und/oder Kennfelder der jeweiligen Komponenten 3 bis 8 verwendet. Hierdurch ist eine besonders einfache und effektive Bestimmung der individuellen Einzel-Kühlanforderungen 20 bis 25 möglich. Bei der Bestimmung der Einzel-Kühlanforderungen 20 bis 25 und/oder bei der Bestimmung der Gesamt-Kühlanforderung durch das Logikteil 2 kann vorteilhafterweise zusätzlich die Fahrzeugsgeschwindigkeit des Kraftfahrzeugs berücksichtigt werden, die sich auf die im Motorraum des Kraftfahrzeugs zirkulierende/strömende Luft auswirkt. Natürlich können bei der Bestimmung der Gesamt-Kühlanforderung weitere zu kühlende Komponente des Kraftfahrzeugs, wie beispielsweise er mit der elektrischen Maschine 9 wirkverbundener Energiespeicher 15, berücksichtigt werden. Natürlich wird bei der Bestimmung der Kühlleistung die aktuelle Temperatur des Kühlmittels des einen oder der mehreren Kühlmittelkreisläufe hinzugezogen. Darüber hinaus kann auch die Temperatur eines Getriebeöls eines Getriebes des Hybridantriebs sowie der Klimakompressordruck einer Klimaanlage einbezogen werden. Prinzipiell spielt es keine Rolle, ob es sich bei dem Kühlmittelkreislauf um eine Wasser- oder eine Luftkühlung handelt.

## Patentansprüche

1. Verfahren zum Kühlen von Komponenten eines Kraftfahrzeugs, wobei die momentane Kühlleistung aus einer Gesamt-Kühlanforderung ermittelt wird und sich die Gesamt-Kühlanforderung aus Einzel-Kühlanforderungen der Komponenten zusammensetzt, wobei das Kraftfahrzeug mit einem Hybridantrieb betrieben wird, der mindestens einen Verbrennungsmotor und mindestens eine elektrische Maschine aufweist, wobei die elektrische Maschine von einer Leistungselektronik angesteuert wird und wobei bei der Ermittlung der Gesamt-Kühlanforderung eine Elektrische-Maschinen-Kühlanforderung als Einzel-Kühlanforderung berücksichtigt wird, **dadurch gekennzeichnet, dass** zur Bestimmung der Elektrische-Maschinen-Kühlanforderung der Betriebsstatus der elektrischen Maschine und/oder des des Hybridantriebs berücksichtigt wird wobei der Betriebsstatus das Fahrprogramm beschreibt, in dem sich der Hybridantrieb befindet.

2. Verfahren nach Anspruch 1, **dadurch gekennzeichnet, daß** zusätzlich eine Leistungselektronik-Kühlanforderung als Einzel-Kühlanforderungen berücksichtigt wird.

3. Verfahren nach Anspruch 1 oder 2, **dadurch gekennzeichnet, dass** die Leistungselektronik mindestens einen Pulswechselrichter aufweist.

4. Verfahren nach einem der vorhergehenden Ansprüche, **dadurch gekennzeichnet, dass** die Leistungselektronik mindestens einen DCDC-Wandler aufweist.

5. Verfahren nach einem der vorhergehenden Ansprüche, **dadurch gekennzeichnet, dass** zur Bestimmung der Leistungselektronik-Kühlanforderung der Betriebszustand der Leistungselektronik berücksichtigt wird.

6. Verfahren nach einem der vorhergehenden Ansprüche, **dadurch gekennzeichnet, dass** zur Bestimmung der Leistungselektronik-Kühlanforderung der Betriebszustand des Pulswechselrichters und/oder des DCDC-Wandlers berücksichtigt wird.

7. Verfahren nach einem der vorhergehenden Ansprüche, **dadurch gekennzeichnet, dass** zu Bestimmung einer Einzel-Kühlanforderung Kennwerte, Kennlinien und/oder Kennfelder der zu kühlenden Komponenten des Kraftfahrzeugs verwendet werden.

8. Verfahren nach einem der vorhergehenden Ansprüche, **dadurch gekennzeichnet, dass** zum Bestimmen einer Einzel-Kühlanforderung und/oder der Gesamt-Kühlanforderung die Umgebungslufttemperatur und/oder der Umgebungsdruck des Kraftfahrzeugs, insbesondere des Hybridantriebs, berücksichtigt werden.

9. Verfahren nach einem der vorhergehenden Ansprüche, **dadurch gekennzeichnet, dass** zur Bestimmung einer Einzel-Kühlanforderung und/oder der Gesamt-Kühlanforderung die Fahrzeuggeschwindigkeit des Kraftfahrzeugs berücksichtigt wird.

10. Verfahren nach einem der vorhergehenden Ansprüche, **dadurch gekennzeichnet, dass** die Einzel-Kühlanforderung von mindestens einer zu kühlenden Komponente des Kraftfahrzeugs von der Komponente vorgegeben wird.

## Claims

1. Method for cooling components of a motor vehicle, the instantaneous cooling power being determined from a total cooling demand, and the total cooling demand being composed of individual cooling demands of the components, the motor vehicle being operated with a hybrid drive which has at least one internal combustion engine and at least one electric machine, the electric machine being actuated by power electronics, and an electric machine cooling demand being taken into consideration as an individual cooling demand in the determination of the total cooling demand, **characterized in that** the operating status of the electric machine and/or that of the hybrid drive is taken into consideration for determining the electric machine cooling demand, the operating status describing the driving program in which the hybrid drive is operating.

2. Method according to Claim 1, **characterized in that** a power electronics cooling demand is additionally taken into consideration as an individual cooling demand.

3. Method according to Claim 1 or 2, **characterized in that** the power electronics have at least one pulse inverter.

4. Method according to one of the preceding claims, **characterized in that** the power electronics have at least one DC/DC converter.

5. Method according to one of the preceding claims, **characterized in that** the operating state of the power electronics is taken into consideration for determining the power electronics cooling demand.

6. Method according to one of the preceding claims, **characterized in that** the operating state of the pulse inverter and/or of the DC/DC converter is taken into consideration for determining the power electronics cooling demand.

7. Method according to one of the preceding claims, **characterized in that** characteristic values, characteristic curves and/or characteristic maps of the motor vehicle components to be cooled are used for determining an individual cooling demand.

8. Method according to one of the preceding claims, **characterized in that** the ambient air temperature and/or the ambient pressure of the motor vehicle, in particular of the hybrid drive, are taken into consideration for determining an individual cooling demand.

9. Method according to one of the preceding claims, **characterized in that** the vehicle speed of the motor vehicle is taken into consideration for determining an individual cooling demand and/or the total cooling demand.

10. Method according to one of the preceding claims, **characterized in that** the individual cooling demand of at least one motor vehicle component to be cooled is predefined by the component.

## Revendications

1. Procédé de refroidissement de composants d'un véhicule automobile, dans lequel la puissance de refroidissement instantanée est déterminée à partir d'une demande de refroidissement totale et la demande de refroidissement totale est constituée de demandes de refroidissement individuelles des composants, le véhicule automobile étant entraîné avec un entraînement hybride, qui présente au moins un moteur à combustion interne et au moins une machine électrique, la machine électrique étant commandée par une électronique de puissance et, lors de la détermination de la demande de refroidissement totale, une demande de refroidissement de la machine électrique étant prise en compte en tant que demande de refroidissement individuelle, **caractérisé en ce que** pour déterminer la demande de refroidissement de la machine électrique, l'état de fonctionnement de la machine électrique et/ou celui de l'entraînement hybride sont pris en compte, l'état de fonctionnement décrivant le programme de conduite dans lequel se trouve l'entraînement hybride.

2. Procédé selon la revendication 1, **caractérisé en ce que** de plus, une demande de refroidissement de l'électronique de puissance est prise en compte en tant que demande de refroidissement individuelle.

3. Procédé selon la revendication 1 ou 2, **caractérisé en ce que** l'électronique de puissance présente au moins un onduleur à impulsions.

4. Procédé selon l'une quelconque des revendications précédentes, **caractérisé en ce que** l'électronique de puissance présente au moins un convertisseur CC-CC.

5. Procédé selon l'une quelconque des revendications précédentes, **caractérisé en ce que** pour déterminer la demande de refroidissement de l'électronique de puissance, l'état de fonctionnement de l'électronique de puissance est pris en compte.

6. Procédé selon l'une quelconque des revendications précédentes, **caractérisé en ce que** pour déterminer la demande de refroidissement de l'électronique de puissance, l'état de fonctionnement de l'onduleur à impulsions et/ou du convertisseur CC-CC est pris en compte.

7. Procédé selon l'une quelconque des revendications précédentes, **caractérisé en ce que** pour déterminer une demande de refroidissement individuelle, on utilise des valeurs caractéristiques, des courbes caractéristiques et/ou des champs caractéristiques des composants à refroidir du véhicule automobile.

8. Procédé selon l'une quelconque des revendications précédentes, **caractérisé en ce que** pour déterminer une demande de refroidissement individuelle et/ou la demande de refroidissement totale, la température de l'air ambiant et/ou la pression ambiante du véhicule automobile, notamment de l'entraînement hybride, sont prises en compte.

9. Procédé selon l'une quelconque des revendications précédentes, **caractérisé en ce que** pour déterminer une demande de refroidissement individuelle et/ou la demande de refroidissement totale, la vitesse du véhicule automobile est prise en compte.

10. Procédé selon l'une quelconque des revendications précédentes, **caractérisé en ce que** la demande de refroidissement individuelle d'au moins un composant à refroidir du véhicule automobile est prédéfinie par le composant.
